# EUROPÄISCHE PATENTANMELDUNG

(11) **EP 4 485 246 A1**
(43) Veröffentlichungstag der Anmeldung: **01.01.2025**
(21) Anmeldenummer: 24183108.0
(22) Anmeldetag: 19.06.2024
(51) Int. Cl.: G06F 21/55, G01C 21/28, G06F 21/57, G01C 21/20

(54) **VERFAHREN ZUR VORNAHME EINER STEUERFUNKTION MITTELS EINER STEUERSOFTWARE UND EIN FAHRZEUG MIT ENTSPRECHENDER STEUERSOFTWARE**

(30) Priorität: 26.06.2023 DE 102023116670
(71) Anmelder: Bayerische Motoren Werke Aktiengesellschaft, 80809 München (DE)
(72) Erfinder: Minnerup, Pascal, 85716 Unterschleißheim (DE); Petsch, Susanne, 81825 München (DE); Spanfelner, Bernd, 85560 Ebersberg (DE)

(57) **Zusammenfassung**

Die Erfindung betrifft ein Verfahren zur Vornahme von Steuerfunktionen mittels einer Steuersoftware (Soft), insbesondere einer Software zur Steuerung eines Fahrzeugs, wobei die Steuersoftware (Soft) Codeabschnitte (AB1, AB2) mit Prüfcode, insbesondere eines Validators (GV, LV, SV, HV), zur Validierung von Berechnungen zugeordnet sind, wobei mittels Verteidigungsniveau-Angaben den in der Steuersoftware (Soft) enthaltenen Prüfcodes jeweils in Bezug auf einen Angriff aus einer Angriffsliste (Att) ein Verteidigungsniveau (DefL) zuzuordnen ist, wobei das Verfahren folgende Schritte umfasst:
a) computergestütztes Berechnen mindestens eines Gesamtverteidigungsniveaus (TDef) unter Verwendung zumindest einer Auswahl der Verteidigungsniveau-Angaben (Def);
b) Verwenden des Gesamtverteidigungsniveaus (TDef) zur Verbesserung der Sicherheit der Steuersoftware (Soft).

## Beschreibung

Die vorliegende Erfindung betrifft ein Verfahren zur Vornahme einer Steuerfunktion mittels einer Steuersoftware und ein Fahrzeug mit entsprechender Steuersoftware.

Um ein Kraftfahrzeug autonom steuern zu können, ist es notwendig, hochgradig verlässliche Software, insbesondere Steuersoftware, zu entwickeln.

Beispielsweise können zur Positionsbestimmung verschiedene Informationsquellen ausgewertet werden, wobei jede Informationsquelle einem Sensor zugeordnet sein kann. Die unterschiedlichen Informationsquellen können statistisch voneinander unabhängig sein. Beispielsweise kann eine erste Positionsinformation auf der Basis von Signalen eines Beschleunigungssensors, eine zweite Positionsinformation auf der Basis von Raddrehzahlen des Kraftfahrzeugs und eine dritte Positionsinformation auf der Basis eines mittels einer Kamera erfassten Objekts im Umfeld des Kraftfahrzeugs bestimmt sein. Eine Positionsinformation betrifft üblicherweise eine geografische Position und kann als Pose zusätzlich eine Ausrichtung des Kraftfahrzeugs umfassen. Die jeweils bestimmten Informationen können mit geografischen Informationen abgeglichen werden, die in Kartendaten verzeichnet sind.

In diesem Zusammenhang ist es bekannt, die Positionsinformationen der einzelnen Informationsquellen zunächst unabhängig voneinander bezüglich ihrer Plausibilität zu prüfen, indem bestimmt wird, ob die Positionsinformationen einer Informationsquelle ausreichend gut zu denen der anderen passen. Dabei wird in der Regel eine zeitlich korrelierte oder gleichzeitige Beobachtung durch die einzelnen Informationsquellen angenommen und die solchermaßen zueinander passenden Positionsinformationen können in einem Satz zusammengefasst werden. Dann kann die geografische Position auf der Basis nur solcher Positionsinformationen bestimmt werden, die als ausreichend plausibel gelten bestimmt sind. Die Plausibilitätskontrolle kann mittels eine Validators durchgeführt werden, der bevorzugt bestimmt, ob die bereitgestellten Positionsinformationen einer Informationsquelle mit einer vorbestimmten Mindestwahrscheinlichkeit nicht mehr als ein vorbestimmtes Maß von einer auf der Basis von Positionsinformationen aller Informationsquellen bestimmten Position abweichen.

Derartige Validatoren können beispielsweise mittels maschinellen Lernens trainiert sein.

Es ist somit bekannt, Validatoren einzusetzen, um Probleme mit einzelnen Sensoren zu erkennen und darauf zu reagieren (vgl. DE 10 2021 123 714 A1). Mit der zunehmenden Digitalisierung und Ausstattung von Fahrzeugen eröffnet sich aber ein neues Feld von potentiellen Gefahrenquellen. So gibt es Angriffe auf die Software, um beispielsweise Kontrolle über ein bestimmtes Fahrzeug zu erlangen. Wesentlich destruktiver stellen sich Ansätze dar, bei denen die Software bewusst attackiert wird, um ein Fehlverhalten zu provozieren. Dies kann mitunter zu Personenschäden führen. Beispielsweise gibt es GPS-Jammer, die die Funktionalität von Steuersoftware in Fahrzeugen erheblich beeinträchtigen können. Alternativ können Schilder überklebt werden und ein Fehlverhalten der Software zu provozieren.

Derartige Angriffe sind neu, und es gibt bisher nur sehr wenige Ansätze, um diesen zu begegnen.

Ausgehend von dieser Situation ist es Aufgabe der vorliegenden Erfindung, ein verbessertes Verfahren zur Durchführung einer Steuerfunktion aufzuzeigen. Insbesondere soll eine Software, insbesondere eine Steuersoftware, geschaffen werden, die unter allen Bedingungen robust funktionieren und Fehlfunktionen oder Angriffe erkennen.

Die Aufgabe wird durch das Verfahren gemäß Anspruch 1 gelöst. Insbesondere wird die Aufgabe durch ein Verfahren zur Vornahme von Steuerfunktionen mittels einer Steuersoftware, gelöst, wobei die Steuersoftware Codeabschnitte mit Prüfcode, insbesondere eines Validators, zur Validierung von Berechnungen zugeordnet sind, wobei mittels Verteidigungsniveau-Angaben den in der Steuersoftware enthaltenen Prüfcodes jeweils in Bezug auf einen Angriff aus einer Angriffsliste ein Verteidigungsniveau zuordnen ist. Das erfindungsgemäße Verfahren umfasst die folgenden Schritte:
a) computergestütztes Berechnen mindestens eines Gesamtverteidigungsniveaus unter Verwendung zumindest einer Auswahl der Verteidigungsniveau-Angaben;
b) Verwenden des Gesamtverteidigungsniveaus zur Verbesserung der Sicherheit der Steuersoftware.

Der Steuersoftware können also Prüfcodes zugeordnet sein. D.h. sie kann diese umfassen oder es können gesonderte Module vorgesehen werden, die die Prüfcodes enthalten. Derartige Prüfcodes können Validatoren sein, die angeben, ob ein bestimmter Codeabschnitt, das Programm insgesamt, eine Messung, eine Berechnung, etc. ordnungsgemäß funktionieren. In einer Ausführungsform führt die Steuersoftware eine Berechnung, beispielsweise basierend auf einer Messung durch. Der Validator bzw. der Prüfcode gibt an, ob die Messung bzw. die Messquelle zuverlässig ist. Gemäß der vorliegenden Erfindung wird der Begriff Messung bzw. Messergebnis sehr breit verstanden. Ein Messergebnis kann jegliche Angabe sein, die auf der Bestimmung eines Sachverhalts in der Realität basiert. Vorzugsweise werden hierfür Sensoren, beispielsweise Positionsbestimmungssensoren, optische und/oder akustische Sensoren eingesetzt.

Die Angriffsliste kann eine Liste von für die Steuersoftware potentiell gefährlichen Angriffen enthalten. Beispielsweise kann in einem bestimmten Codeabschnitt eine Positionsbestimmung mittels einer GPS-Einrichtung erfolgen. Ein potentieller Angriff, der dieser Positionsbestimmung zugeordnet sein kann, kann das Jammen des GPS-Signals sein.

Die Verteidigungsniveau-Angaben ordnen einem bestimmten Prüfcode, beispielsweise einem Validator, ein Verteidigungsniveau zu. Vorzugsweise erfolgt die Zuordnung mit Bezug auf einen bestimmten Angriff. Im obengenannten Beispiel könnte das das Jammen des GPS-Signals sein.

Unterschiedliche Angaben über Verteidigungsniveaus können vorzugsweise in externen Datenquellen abgelegt sein. In einer Ausführungsform können diese Zuordnungen können über Referenzen erfolgen. Es ist auch möglich, das konkrete Verteidigungsniveau als Teil des Validators aufzuführen.

Das erfindungsgemäße Verfahren nutzt die Angaben über die unterschiedlichen Verteidigungsniveaus, die den unterschiedlichen Angriffen Validator-spezifisch zugeordnet sind, um ein Gesamtverteidigungsniveau zu berechnen. Dieses Gesamtverteidigungsniveau kann genutzt werden, um die Sicherheit der Steuersoftware zu verbessern. Das Gesamtverteidigungsniveau muss nicht zwangsläufig alle Verteidigungsniveaus berücksichtigen. Erfindungsgemäß wird bereits von einem Gesamtverteidigungsniveau gesprochen, wenn mindestens zwei Verteidigungsniveaus zu einem neuen Wert kombiniert werden.

In einer Ausführungsform kann das Gesamtverteidigungsniveau iterativ bestimmt werden, wobei ein Abbruch (=die Berücksichtigung weitere Verteidigungsniveaus) bereits dann erfolgen kann, wenn ein Schwellwert unterschritten oder überschritten wird. Ein Abbruch kann beispielsweise dann erfolgen, wenn für einen bestimmten Angriff unter Berücksichtigung aller vorhandenen Prüfcodes ein Mindestwert nicht erreicht wird.

In einer Ausführungsform werden für jeden Angriff aus der Angriffsliste die einzelnen Validatoren betrachtet und ein entsprechendes Verteidigungsniveau bestimmt.

Es ist möglich, mit diesem Verfahren Software, die sich noch in der Entwicklung befindet, zu verbessern. Beispielsweise kann festgestellt werden, dass ein bestimmtes Sicherheitsniveau nicht erfüllt wird, so dass es möglich ist, zusätzliche Sicherheitsmechanismen vorzusehen. In einer Ausführungsform ist das erfindungsgemäße Verfahren Teil der Steuersoftware oder läuft parallel dazu ab und führt dazu, dass im Schritt b) bei Vorliegen bestimmter Kriterien zumindest eine Funktion der Steuersoftware deaktiviert wird. Insofern kann die Erfindung dazu genutzt werden, um das System, auf dem die Steuersoftware läuft, stets in einem sicheren Zustand zu halten. Beispielsweise können Funktionen, die ein vorgegebenes Sicherheitsverteidigungsniveau nicht mehr erfüllen, abgeschaltet werden. Am Beispiel des autonomen Fahrens kann beispielsweise der Fahrer aufgefordert werden, die Kontrolle über das Fahrzeug zu übernehmen, wenn ein bestimmtes Verteidigungsniveau nicht mehr eingehalten werden kann. Dies führt zu einem robusteren Verhalten des gesamten Systems.

In einer Ausführungsform umfasst der Schritt b) ein Vergleichen des Gesamtverteidigungsniveaus mit einem Schwellwert und ein Ergreifen einer Maßnahme, beispielsweise das bereits beschriebene Deaktivieren einer Funktion der Steuersoftware. Der Schwellwert kann ein Maximalwert oder ein Minimalwert sein, wobei die beschriebene Maßnahme dann erfolgen kann, wenn dieser Schwellwert über- bzw. unterschritten wird.

In einer Ausführungsform umfasst ein erster Prüfcode einen Code zur Validierung einer Position unter Verwendung eines satellitengestützten Systems, beispielsweise einer GPS-Einrichtung und/oder einer GNUS-Einrichtung.

In einem Ausführungsbeispiel umfasst ein zweiter Prüfcode einen Code zur Validierung einer Position unter Verwendung eines Videosystems, beispielsweise eines Systems zur optischen Spurerkennung.

In einer Ausführungsform umfasst ein dritter Prüfcode einen Code zur Validierung einer Position unter Verwendung eines Lidar- und/oder Radarsystems. Die einzelnen Ausführungsformen mit den drei unterschiedlichen Prüfcodes können nach Belieben miteinander kombiniert werden. Es ist möglich, weitere Prüfcodes vorzusehen, beispielsweise kann ein Prüfcode Code zur Validierung einer Position und/oder einer Regel, beispielsweise einer Verkehrsregel, unter Verwendung eines Videosystems umfassen, wobei beispielsweise Verkehrszeichen optisch erfasst werden.

In einer Ausführungsform wird für jeden Prüfcode geprüft, ob er aktiv oder deaktiv ist. D.h. es wird festgestellt, ob der jeweilig Prüfcode einen Beitrag zur Sicherheit leistet. Beim Durchlaufen der Angriff können in einer Ausführungsform nur die Prüfcodes für den jeweiligen Angriff berücksichtigt werden, die aktiv sind. Das jeweilige Verteidigungsniveau wird dann mit den weiteren Verteidigungsniveaus kombiniert, die von den Prüfcodes angeboten werden, die in Bezug auf den jeweiligen Angriff aktiv sind. Eine Kombination der Verteidigungsniveaus in Bezug auf einen bestimmten Angriff kann eine Addition des für den jeweiligen (aktiven) Prüfcode ermittelten Verteidigungsniveaus umfassen. Somit erhöht in einem Ausführungsbeispiel jeder aktiver Prüfcode soweit dieser in Bezug auf den Angriff einen Wert größer Null hat (=wirksam ist) das Verteidigungsniveau.

In einer Ausführungsform werden in Schritt b) die für einen bestimmten Angriff ermittelten (kombinierten) Verteidigungsniveaus mit einem Minimumoperator kombiniert. Somit bestimmt der gefährlichste Angriff in diesem Ausführungsbeispiel (geringes Verteidigungsniveau ist schlecht) das Gesamtverteidigungsniveau. Alternativ kann eine Kombination mittels eines Maximumoperators erfolgen, wenn das Verteidigungsniveau so aufgesetzt ist, dass ein niedriger Wert eine besonders gute Absicherung symbolisiert.

In einer Ausführungsform ist bei einem/dem Vergleich des Gesamtverteidigungsniveaus mit einem Schwellwert, der Schwellwert adaptiv (anpassungsfähig) eingerichtet. Auf diese Weise wird die Flexibilität des Verfahrens weiter erhöht und das Verfahren kann an verschiedene Gefahrensituationen, in denen sich das Fahrzeug ggf. befindet, angepasst werden. Insgesamt wird die Sicherheit damit weiter verbessert.

In einer bevorzugten Ausführungsform ist der adaptive Schwellwert positions- und/oder situationsabhängig. Unter "positionsabhängig" wird dabei vorzugsweise die Fahrzeugposition verstanden.

Auf diese Weise kann eine Hürde für den sicheren Zustand der Steuersoftware in Abhängigkeit einer (Fahrzeug-)Position und/oder einer Situation in der sich das Fahrzeug befindet höher gelegt werden, sodass in dieser Position und/oder Situation mögliche Angriffe beispielsweise schneller bzw. zuverlässiger erkennen lassen und eine entsprechende Reaktionszeit für eine Gegenmaßnahme verkürzt werden kann. Konkret kann beispielsweise ein Alert-Level als Schwellwert für bestimmte (Fahrzeug-)positionen vorgesehen sein, an denen die Möglichkeit eines Angriffs erhöht ist. Insgesamt wird die Sicherheit damit weiter verbessert.

Die eingangs genannte Aufgabe wird weiterhin durch einen computerlesbaren Speicher mit Instruktionen zur Implementierung einer der bereits beschriebenen Ausführungsformen gelöst, wobei die Instruktionen vorzugsweise derart ausgewählt sind, dass sie bei einer Ausführung auf mindestens einem Prozessor zur Implementierung des Verfahrens führen.

Die Aufgabe wird weiterhin durch ein Fahrzeug, insbesondere ein autonom fahrendes Fahrzeug gelöst, das einen entsprechendes Speicher umfasst und/oder derart ausgebildet ist, dass es zumindest eines der bereits beschriebenen Verfahren implementiert.

Die Aufgabe wird weiterhin gelöst durch ein Fahrzeug das umfasst:
- ein oder mehrere computerlesbare Speichermedien
   a) zum Speichern eines Steuersoftware, wobei die Steuersoftware Codeabschnitte mit Prüfcode, insbesondere eines Validators, zur Validierung von Berechnungen, insbesondere Berechnungen basierende auf Messergebnissen, zugeordnet sind;
   b) zum Speichern mindestens einer Angriffsliste;
   c) zum Speichern von Verteidigungsniveau-Angaben, die den in der Steuersoftware enthaltenen Prüfcodes jeweils in Bezug auf einen Angriff aus der Angriffsliste ein Verteidigungsniveau zuordnet
- mindestens einen Prozessor, der eine Kontrollsoftware ausführt, die dazu ausgebildet ist, mindestens ein Gesamtverteidigungsniveau unter Verwendung zumindest einer Auswahl der Verteidigungsniveau-Angaben zu berechnen; und mindestens eine Funktion der Steuersoftware zu deaktivieren, wenn das Gesamtverteidigungsniveaus einen Grenzwert unter- oder überschreitet.

Es ergeben sich in Bezug auf den computerlesbaren Speicher sowie das jeweilige Fahrzeug ähnliche Vorteile, wie diese bereits in Verbindung mit dem Verfahren beschrieben wurden.

In einer Ausführungsform umfasst der Speicher:
- einen ersten Prüfcode zur Validierung einer Position unter Verwendung eines satellitengestützten Systems, beispielsweise eines GPS und/oder eines GNUS und/oder
- einen zweiten Prüfcode zur Validierung einer Position unter Verwendung eines Videosystems, beispielsweise eines Systems zur optischen Spurerkennung, und/oder
- einen dritten Prüfcode zur Validierung einer Position unter Verwendung eines Lidar- und/oder Radarsystems.

In einer Ausführungsform ist die Kontrollsoftware dazu ausgebildet, vor der Deaktivierung der mindestens einen Funktion, einen Insassen des Fahrzeugs aufzufordern eine Aufgabe, beispielsweise das Steuern das Fahrzeugs, zu übernehmen. Wie bereits erläutert, kann die Kontrollsoftware Teil der Steuersoftware sein oder gesondert von dieser ausgeführt werden. Das Auffordern zur Übernahme der mindestens einen Funktion seitens der Kontrollsoftware kann mittels unterschiedlicher Aktuatoren erfolgen, beispielsweise mittels optischer Signale (blinkendes Licht, Anzeige auf einem LCD-Bildschirm), Vibrationssignalen oder akustischen Signalen.

Nachfolgend wird die Erfindung auch hinsichtlich weiterer Merkmale und Vorteile anhand von Ausführungsbeispielen beschrieben, die mittels Abbildungen näher erläutert werden.

Hierbei zeigen:
- Fig. 1: ein autonom fahrendes Fahrzeug, das das erfindungsgemäße Verfahren implementiert;
- Fig. 2: eine schematische Verarbeitung der vorhandenen Daten durch einen Prozessor, der Teil des Fahrzeugs gemäß Fig. 1 ist;

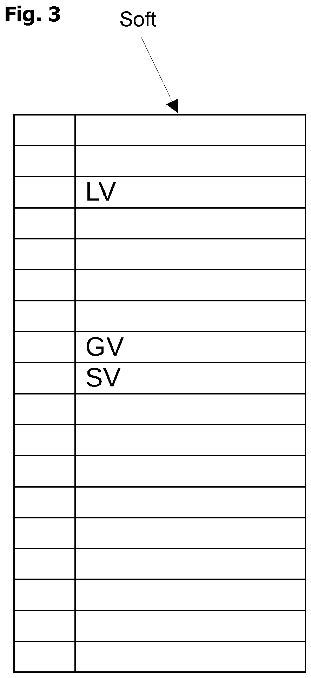

- Fig. 3: eine schematische Darstellung einer Steuersoftware, die erfindungsgemäß validiert bzw. überwacht wird;
- Fig. 4: eine Tabelle mit potentiellen Angriffen; und
- Fig. 5: eine Tabelle, die Validatoren angriffsspezifische Verteidigungsniveaus zuordnet.
In der nachfolgenden Beschreibung werden für gleiche und gleichwirkende Teile dieselben Bezugsziffern verwendet.

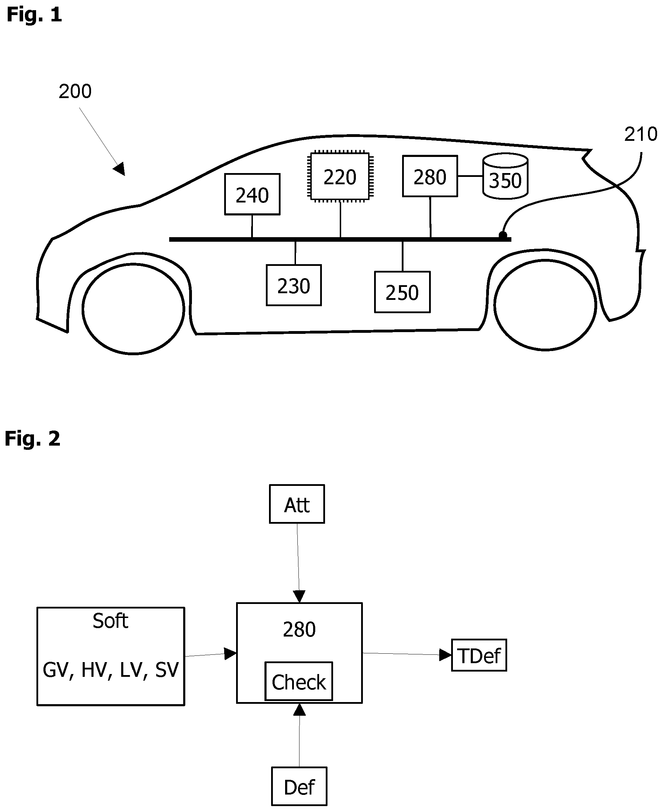

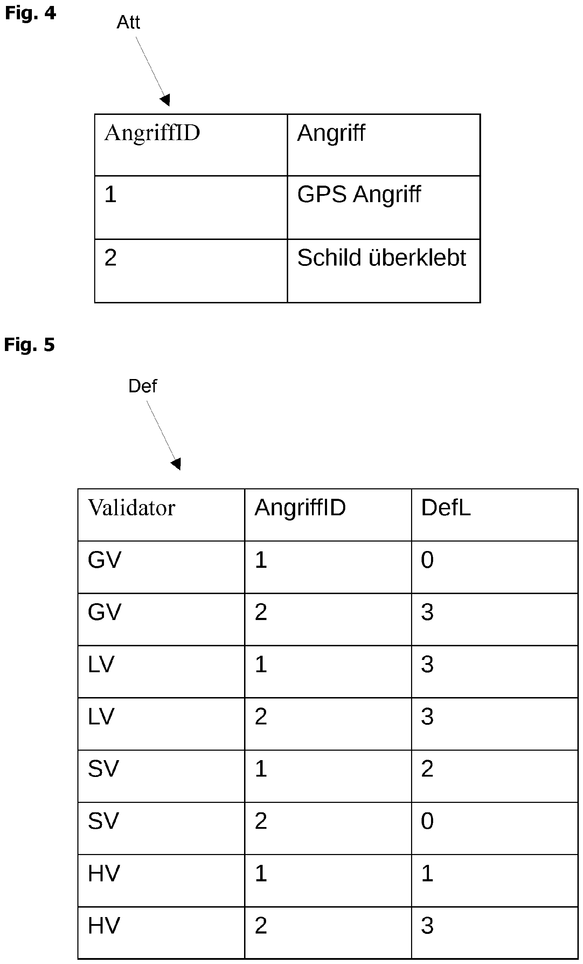

Fig. 1 zeigt ein Fahrzeug 200 das mit einem Fahrzeugbus 210 ausgestattet ist. Der Fahrzeugbus 210 verbindet einige Komponenten des Fahrzeugs 200. Hierunter fallen ein Kamerasystem 240, ein Lidar-System 250, eine GPS-Einrichtung 220 sowie ein Steuermodul 280. Das Steuermodul 280 ist mit einer Datenbank 350 verbunden, um Daten, insbesondere solche wie diese exemplarisch in Fig. 4 und 5 gezeigt sind, zu speichern. In einem anderen Ausführungsbeispiel werden Daten einfach in einer Datei gespeichert, so dass auf die Datenbank 350 verzichtet werden kann.

Das Steuermodul 280 verfügt über einen Prozessor, der mittels einer Steuersoftware Soft eine Steuerfunktion implementiert. In einem Ausführungsbeispiel kann es sich bei der Steuersoftware Soft um eine Softwarekomponente handeln, die das autonome Bewegen des Fahrzeugs 200 im Straßenverkehr implementiert. Für das Ausführungsbeispiel wird davon ausgegangen, dass es sich hierbei um eine hochautomatisierte (Level 4) oder vollautomatisierte (Level 5) Fahrt handelt.

Zur Verbesserung des Sicherheitsniveaus ist das Fahrzeug 200 mit einer Kontrollsoftware Check (vgl. Fig. 2) ausgestattet. Diese führt eine fortlaufende Kontrollfunktion aus und stellt sicher, dass das Fahrzeug verlässlich im Straßenverkehr navigiert. Hierzu sind der Steuersoftware Validatoren zugeordnet. Hierbei kann es sich um:
- einen GPS-Validator GV,
- einen Straßenrandbegrenzungs-Validator LV ("Lane boundary-validator"),
- einen Schilder-Validator SV und/oder
- einen GPS-Vergangenheits-Validator HV ("GPS-history validator") handeln.

Die Kontrollsoftware Check kennt unterschiedliche Angriffe, die in einer Angriffstabelle Att (vgl. Fig. 4) aufgelistet sind. Sie hat Zugriff auf eine Verteidigungstabelle Def, die jedem der genannten Validatoren GV, LV, SV, HV in Bezug auf einen bestimmten Angriff ein Verteidigungsniveau DefL zuordnet. Eine entsprechende Verteidigungstabelle Def ist in Fig. 5 gezeigt. In einem Ausführungsbeispiel liefert der jeweilige Validator einen booleschen Wert, der Angibt, ob der jeweilige Validator aktiv ist. Die Verteidigungstabelle Def kann so ausgestaltet sein, dass sie vorgibt, dass ein bestimmtes Verteidigungsniveau ("DefL") für den jeweiligen Validator GV, LV, SV, HV dann vorliegt, wenn dessen Ausgabewert WAHR ist. Andernfalls (Ausgabewert = FALSCH) kann in diesem Ausführungsbeispiel davon ausgegangen werden, dass in Bezug auf den jeweiligen Validator und dem jeweiligen Angriff kein oder ein geringes Verteidigungsniveau vorliegt.

Unter Verwendung der Verteidigungstabelle Def kann die Kontrollsoftware Check für jeden Angriff aus der Angriffstabelle Att ein Verteidigungsniveau DefL bestimmen oder angeben, ob ein vorgegebenes Verteidigungsniveau TDefMin erfüllt ist.

In einer Ausführungsform implementiert die Kontrollsoftware Check den nachfolgenden Pseudocode:

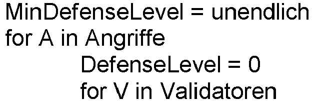

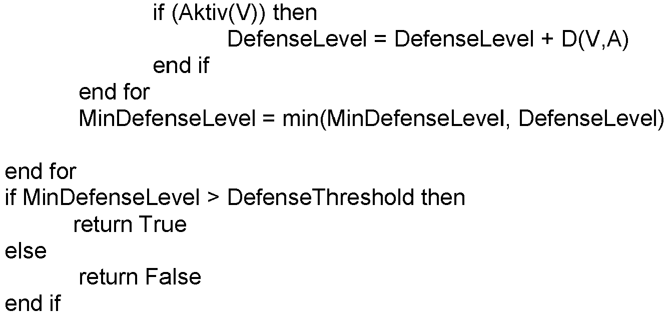

Dieser berechnet für alle Angriff (vgl. Variable "A") ein Verteidigungsniveau (vgl. Variable "DefenseLevel") und fasst für alle Angriffe zusammen (vgl. Variable "MinDefenseLeve"). Überschreitet das so berechnete Gesamtverteidigungsniveau TDef (vgl. Variable "MinDefenseLevel") einen Schwellwert TDefMin (vgl. Variable "DefenseThreshold") so wird WAHR als Rückgabewert geliefert ("return True"). In diesem Fall kann davon ausgegangen werden, dass sich die Steuersoftware Soft in einem sicheren Zustand befindet. Andernfalls ("return False") muss davon ausgegangen werden, dass sich die Steuersoftware Soft in einem unsicheren Zustand befindet und es notwendig ist, entsprechende Gegenmaßnahmen einzuleiten. Entsprechende Gegenmaßnahmen können sich beispielsweise darauf belaufen, dass das Fahrzeug 200 abgeschaltet wird oder der Fahrer aufgefordert wird, verschiedene Steuerfunktionen eigenständig zu übernehmen.

Der Pseudocode enthält eine weitere Schleife, die für jeden Angriff alle vorgesehenen Validatoren, z.B. die Validatoren GV, LV, SV, HV, überprüft. Für jeden Validator wird kontrolliert, ob dieser aktiv ist (vgl. Funktion "Active(V)"). Wenn dies der Fall ist, wird anhand der Verteidigungstabelle Def für den jeweiligen Validator und den jeweiligen Angriff ein Verteidigungsniveau bestimmt (vgl. Anwendung der Funktion "D(V,A)"). Das so ermittelte Verteidigungsniveau DefL wird dann mit einem bisher für den Angriff ermittelten Verteidigungsniveau kombiniert (vgl. Plus-Operation "DefenseLevel + D(V,A)").

In einem anderen Ausführungsbeispiel können Simulationen durchgeführt werden, bei denen Sensoren zufällig ausfallen, so dass die jeweiligen Validatoren angeben, dass der jeweilige Sensor nicht aktiv ist (vgl. Funktion "Aktiv(V)" im oben gezeigten Pseudocode). Die Kontrollsoftware Check kann dann unter diesen Bedingungen unterschiedliche Verteidigungsniveaus für unterschiedliche Angriffe und/oder ein Gesamtverteidigungsniveau TDef ausgeben, um das Sicherheitsniveau der Steuersoftware Soft ggf. in Bezug auf unterschiedliche Angriffe zu beurteilen. Es ist auch möglich, Sensoren Ausfallswahrscheinlichkeiten zuzuordnen und diese Ausfallswahrscheinlichkeiten bei der genannten Simulation zu berücksichtigen.

Fig. 4 zeigt exemplarisch eine Angriffstabelle. In dieser werden alle für die Steuersoftware relevante Angriffe aufgeführt. Im gezeigten Beispiel enthält die Tabelle zwei Spalten. Eine der Spalten ("Angriff") nennt die einzelnen Angriffe, beispielsweise "GPS-Angriff". Die andere ordnet dem jeweiligen Angriff eine Identifikationsnummer ("AngriffID") zu.

Die Verteidigungstabelle Def gemäß Fig. 5 nutzt diese Identifikationsnummer (vgl. die dortige mittlere Spalte) um einigen Validatoren (vgl. erste Spalte mit der Überschrift "Validator") ein Verteidigungsniveau DefL zuzuordnen. So gibt beispielsweise der erste Eintrag in der zweiten Zeile der Tabelle in Fig. 5 an, dass dem Validator GV beim einem GPS-Angriff (AngriffID =1) ein Verteidigungsniveau DefL von 0 zugeordnet ist. Die darauffolgende Zeile gibt an, dass dem gleichen Validator GV bei der Überklebung eines Schildes (AngriffID =2) ein Verteidigungsniveau DefL von 3 zugeordnet ist.

In dem beschriebenen Ausführungsbeispiel wird davon gesprochen, dass der Fahrer aufgefordert wird die Steuerfunktion eigenständig zu übernehmen. Es ist nicht zwangsläufig notwendig, dass in jeder Situation, in der das gewünschte Verteidigungsniveau TDefMin nicht eingehalten wird, die Steuerfunktion vom Fahrer übernommen wird. So kann es Situationen geben bei denen der Fahrer oder ein anderer Insasse des Fahrzeugs lediglich auf ein Problem hingewiesen werden soll. Ein entsprechendes Hinweisen kann mittels einem Signal erfolgen. Das Signal kann dem Fahrer oder allgemein dem Insassen anzeigen, dass zusätzliche Vorsichtsmaßnahmen erforderlich sind, z. B. dass der Fahrer die Hände auf das Lenkrad legt und bereit ist zu bremsen. Das Signal kann durch eine Verringerung der Geschwindigkeit, ein vibrierendes Lenkrad und/oder ein Abdriften der Lenkung zum Fahrbahnrand hin anzeigen, dass zusätzliche Aufmerksamkeit erforderlich ist. Für das Erzeugen des Signals kann das Fahrzeug 200 entsprechende Aktuatoren bestätigen.

In einem Ausführungsbeispiel kann das Fahrzeug über Sensoren verfügen, die feststellen, ob der Fahrer aufmerksam ist, z. B. einen Sensor, der anzeigt, dass die Hände des Fahrers am Lenkrad sind. Das Fahrzeug 200 kann in einen sicheren Modus übergehen, z. B. durch kontrolliertes Anhalten des Fahrzeugs, z. B. am Straßenrand, wenn der Sensor anzeigen, dass der Fahrer das Fahrzeug 200 nicht zufriedenstellend beherrscht oder nicht die gewünschte Aufmerksamkeit zur Verfügung stellt. Erfindungsgemäß können für jeden Codeabschnitt AB1, AB2 sichere Modi definiert sein, die das Fahrzeug 200 einnimmt, wenn die Kontrollsoftware Check feststelle, dass kein ausreichend hohes Verteidigungsniveau TDefMin vorliegt. Für das Einnehmen des jeweiligen sicheren Modus können vom Fahrzeug 200, beispielsweise von der Kontrollsoftware Check geeignete Aktuatoren betätigt werden, z.B. Bremse, Motor, beliebige Lichtsignale, umfassend einen Blinker, etc.

In einem weiterführenden Ausführungsbeispiel ist es möglich, dass der Schwellwert TDefMin an eine Situation und/oder eine Position (z.B. des Fahrzeugs) adaptiv anpassbar ist. Auf diese Weise kann eine Hürde für den sicheren Zustand der Steuersoftware Soft z.B. in Abhängigkeit einer (Fahrzeug-)Position und/oder einer Situation in der sich das Fahrzeug befindet, höher gelegt werden. Eine entsprechende Alert-Information kann beispielsweise geobasiert sein bzw. übermittelt werden.

Konkret kann der Schwellwert TDefMin hierbei auf ein Alert-Level gesetzt werden, z.B. in Reaktion auf den Empfang entsprechender Alert-Informationen. Dies ist speziell an Orten bzw. Gebieten vorteilhaft, bei denen besondere Sicherheit geboten ist, wie z.B. vor Regierungsgebäuden oder an Flughäfen.

Auch in einem Kriegs- oder Krisengebiet, kann eine entsprechende Alert-Information an das Fahrzeug 200 übermittelt werden, um den Schwellwert TDefMin auf ein Alert-Level zu setzen.

Alternativ oder zusätzlich können entsprechende Alert-Informationen bezüglich entsprechender Orte bzw. Gebiete in dem Steuermodul 280 oder der Datenbank 350 hinterlegt sein, sodass der Schwellwert TDefMin bei Erreichen eines entsprechenden Ortes bzw. Gebietes auf ein Alert-Level gesetzt wird.

Dabei ist es auch möglich, die Alert-Information für bestimmte Orte bzw. Gebiete nur zu speziellen Zeiten an das Fahrzeug 200 (und ggf. an weitere Fahrzeuge) zu übermitteln. Beispielhaft hierfür sind insbesondere Orte bzw. Positionen, an denen temporär eine besondere Sicherheit geboten ist bzw. eine Angriffsgefahr unter Umständen erhöht sein kann, wie z.B. an Austragungsstätten von Großereignissen (Fußballspiele, Konzerte, etc.).

Eine Übermittlung der Alert-Informationen an das Fahrzeug 200 kann beispielsweise von dem Fahrzeughersteller oder einem Flottenbetreiber an das Fahrzeug erfolgen. Fahrzeugseitig kann ein Alert-Modul 230 vorgesehen sein, das dazu ausgebildet ist, Alert-Informationen zu senden und/oder zu empfangen.

In einem weiterführenden Ausführungsbeispiel ist es ebenso realisierbar, dass Fahrzeug- bzw. Flottenbeobachter eine entsprechende Alert-Information an das Fahrzeug 200 (bzw. die Fahrzeuge der Fahrzeugflotte) in Reaktion auf entsprechende Gefahrensituationen übermitteln.

Gemäß einem weiteren Ausführungsbeispiel kann beispielsweise ein erstes Fahrzeug 200 einen Angriff an einem Ort (wie oben beschrieben) detektieren. Das Alert-Modul 230 kann dabei dazu ausgebildet sein, diesen Angriff z.B. an einen Server zu übermitteln, sodass weitere Fahrzeuge 200 an diesem Ort eine Alert-Information übermittelt bekommen, um an diesem Ort den Schwellwert TDefMin auf ein Alert-Level zu setzen. Alternativ oder zusätzlich ist es möglich, dass ein Alert-Modul 230 des Fahrzeugs 200 direkt mit einem Alert-Modul 230 eines anderen Fahrzeugs kommuniziert.

Realisierbar ist auch, dass z.B. die Polizei in Reaktion auf entsprechende Gefahrensituationen eine Alert-Information übermittelt, sodass an die Fahrzeuge in der Nähe dieser Gefahrensituation eine entsprechende Alert-Information übermittelt wird.

Alternativ oder zusätzlich kann ein Fahrzeuginsasse eine Alert-Information zur Aktivierung eines Alert-Levels manuell triggern. Hierfür kann das Alert-Modul 230 beispielsweise mit einer entsprechenden Eingabeeinrichtung im Fahrzeuginnenraum verbunden sein.

Gemäß einem weiteren Ausführungsbeispiel kann der Schwellwert situationsabhängig auf ein Alert-Level eingestellt werden, wenn ein Messergebnis, vorzugsweise ein Messergebnis eines Sensors des Fahrzeugs 200, ein ungewöhnliches Signal bzw. ein ungewöhnliches Ereignis umfasst.

Zu derartigen ungewöhnlichen Signalen bzw. Ereignissen gehört beispielsweise, dass der Abstand zwischen DGPS und einer Posenschätzung des Fahrzeugs ungewöhnlich groß ist oder dass ein oder mehrere der Fahrzeugsensoren ungewöhnlich große Ungenauigkeiten melden (d.h. z.B. dass ein konkreter Messwert mit einer erwarteten Größe auseinanderfällt). Derartige Ungenauigkeiten treten in der Regel zufällig auf, sind aber eher selten, sodass ein gehäuftes und/oder langanhaltendes Auftreten für einen gezielten Angriff auf die Informationen des betreffenden Sensors spricht bzw. sprechen kann.

Ein weiteres Beispiel für ein derartiges Ereignis sind unwahrscheinliche Abweichungen zwischen der Bewegungsschätzung eines Sensors und der Bewegungsschätzung der Odometrie.

Das Steuermodul 280 kann darüber hinaus maschinelles Lernen einsetzen, um z.B. zu erlernen, an welchen Orten üblicherweise Alert-Informationen übermittelt bzw. getriggert werden, um so ggf. selbstständig entsprechende Alert-Informationen zu erzeugen bzw. zu verwenden.

An dieser Stelle sei darauf hingewiesen, dass alle oben beschriebenen Teile für sich alleine gesehen und in jeder Kombination, insbesondere der in den Zeichnungen dargestellten Details als erfindungswesentlich beansprucht werden.

### Bezugszeichenliste:

- 200: Fahrzeug
- 210: Fahrzeugbus
- 220: GPS-Einrichtung
- 230: Alert-Modul
- 240: Kamerasystem
- 250: Lidar-System
- 280: Steuermodul
- 350: Datenbank
- AB1, AB2: Codeabschnitt
- Att: Angriffstabelle
- Check: Kontrollsoftware
- Def: Verteidigungstabelle
- DefL: Verteidigungsniveau
- GV, LV, SV, HV: Validator bzw. Prüfsoftware
- Soft: Steuersoftware
- TDef: Gesamtverteidigungsniveau
- TDefMin: minimales Verteidigungsniveau

## Patentansprüche

1. Verfahren zur Vornahme von Steuerfunktionen mittels einer Steuersoftware (Soft), insbesondere einer Software zur Steuerung eines Fahrzeugs, wobei die Steuersoftware (Soft) Codeabschnitte (AB1, AB2) mit Prüfcode, insbesondere eines Validators (GV, LV, SV, HV), zur Validierung von Berechnungen zugeordnet sind, wobei mittels Verteidigungsniveau-Angaben den in der Steuersoftware (Soft) enthaltenen Prüfcodes jeweils in Bezug auf einen Angriff aus einer Angriffsliste (Att) ein Verteidigungsniveau (DefL) zuzuordnen ist, wobei das Verfahren folgende Schritte umfasst:
a) computergestütztes Berechnen mindestens eines Gesamtverteidigungsniveaus (TDef) unter Verwendung zumindest einer Auswahl der Verteidigungsniveau-Angaben (Def);
b) Verwenden des Gesamtverteidigungsniveaus (TDef) zur Verbesserung der Sicherheit der Steuersoftware (Soft).

2. Verfahren nach Anspruch 1,
**dadurch gekennzeichnet , dass**
der Schritt b) ein Deaktivieren zumindest einer Funktion der Steuersoftware (Soft) umfasst.

3. Verfahren nach Anspruch 1 oder 2,
**dadurch gekennzeichnet , dass**
der Schritt b) ein Vergleichen des Gesamtverteidigungsniveaus mit einem Schwellwert (DefMin) und ein Ergreifen einer Maßnahme, beispielsweise ein/das Deaktivieren einer Funktion der Steuersoftware (Soft), umfasst.

4. Verfahren nach einem der vorherigen Ansprüche,
**dadurch gekennzeichnet , dass**
ein erster Prüfcode einen Code zur Validierung einer Position unter Verwendung eines satellitengestützten Systems, beispielsweise eines GPS und/oder eines GNUS und/oder
ein zweiter Prüfcode einen Code zur Validierung einer Position unter Verwendung eines Videosystems, beispielsweise eines Systems zur optischen Spurerkennung, und/oder
ein dritter Prüfcode einen Code zur Validierung einer Position unter Verwendung eines Lidar- und/oder Radarsystems umfasst.

5. Verfahren nach einem der vorherigen Ansprüche,
**dadurch gekennzeichnet, dass**
für jeden Prüfcode bestimmt wird, ob dieser aktiv ist.

6. Verfahren nach einem der vorherigen Ansprüche, insbesondere nach Anspruch 5,
**dadurch gekennzeichnet , dass**
in Schritt b) für einen Angriff aus der Angriffsliste (Att) die Verteidigungsniveaus der aktiven Prüfcodes, insbesondere mittels einer Addition oder Multiplikation, für den jeweiligen Angriff kombiniert werden, um ein angriffsspezifisches Verteidigungsniveau zu bestimmen, und optional die angriffsspezifischen Verteidigungsniveau, insbesondere mittels eines Minimumoperators, kombiniert werden, um das Gesamtverteidigungsniveaus (TDef) zu bestimmen.

7. Verfahren nach einem der vorherigen Ansprüche, insbesondere nach Anspruch 3,
**dadurch gekennzeichnet , dass**
bei einem/dem Vergleich des Gesamtverteidigungsniveaus mit einem Schwellwert (DefMin), der Schwellwert ein adaptiver Schwellwert ist.

8. Verfahren nach einem der vorherigen Ansprüche, insbesondere nach einem der Ansprüche 3 bis 7,
**dadurch gekennzeichnet , dass**
der adaptive Schwellwert positions-, insbesondere fahrzeugpositions-, und/oder situationsabhängig anpassbar ist.

9. Computerlesbares Speichermedium mit Instruktionen zur Implementierung des Verfahrens nach einem der vorhergehenden Ansprüche, wenn die Instruktionen auf mindestens einem Prozessor ausgeführt werden.

10. Fahrzeug, insbesondere ein autonom fahrendes Fahrzeug, das ein computerlesbares Speichermedium nach Anspruch 9 sowie einen Prozessor zur Ausführung der Instruktionen aufweist.

11. Fahrzeug, insbesondere ein autonom fahrendes Fahrzeug, umfassend:
- ein oder mehrere computerlesbare Speichermedien
a) zum Speichern eines Steuersoftware (Soft), wobei die Steuersoftware (Soft) Codeabschnitte mit Prüfcode, insbesondere eines Validators (GV, LV, SV, HV), zur Validierung von Berechnungen, insbesondere Berechnungen basierende auf Messergebnissen, zugeordnet sind;
b) zum Speichern mindestens einer Angriffsliste;
c) zum Speichern von Verteidigungsniveau-Angaben, die den in der Steuersoftware (Soft) enthaltenen Prüfcodes jeweils in Bezug auf einen Angriff aus der Anfgriffsliste (Att) ein Verteidigungsniveau (DefL) zuordnet
- mindestens einen Prozessor (208), der eine Kontrollsoftware (Check) ausführt, die dazu ausgebildet ist, mindestens ein Gesamtverteidigungsniveau (TDef) unter Verwendung zumindest einer Auswahl der Verteidigungsniveau-Angaben (Def) zu berechnen; und
mindestens eine Funktion der Steuersoftware (Soft) zu deaktivieren, wenn das Gesamtverteidigungsniveaus (TDef) einen Grenzwert (TDefMin) unter- oder überschreitet.

12. Fahrzeug nach Anspruch 11, wobei die Steuersoftware umfasst:
einen ersten Prüfcode zur Validierung einer Position unter Verwendung eines satellitengestützten Systems, beispielsweise eines GPS und/oder eines GNUS und/oder
einen zweiten Prüfcode zur Validierung einer Position unter Verwendung eines Videosystems, beispielsweise eines Systems zur optischen Spurerkennung, und/oder
einen dritten Prüfcode zur Validierung einer Position unter Verwendung eines Lidar- und/oder Radarsystems.

13. Fahrzeug nach Anspruch 11 oder 12, wobei die Kontrollsoftware dazu ausgebildet ist, vor der Deaktivierung der mindestens einen Funktion einen Insassen des Fahrzeugs aufzufordern, eine Aufgabe, beispielsweise das Steuern des Fahrzeugs, zu übernehmen.
